(19) Europäisches Patentamt
European Patent Office
Office européen des brevets

(11) Publication number: **0 399 441 A2**

# (12) EUROPEAN PATENT APPLICATION

(21) Application number: **90109624.8**

(22) Date of filing: **21.05.90**

(51) Int. Cl.5: **C09D 4/00, C09K 3/18, G02B 1/10**

(30) Priority: **26.05.89 US 357468**

(43) Date of publication of application: **28.11.90 Bulletin 90/48**

(84) Designated Contracting States: **DE FR GB IT**

(71) Applicant: **PANELGRAPHIC CORPORATION**
**10 Henderson Drive**
**West Caldwell, NJ 07006(US)**

(72) Inventor: **Chen, Shih-Chung**
**10 Cypress Avenue**
**Verona, New Jersey 07044(US)**
Inventor: **Brixius, Darryl W.**
**32 Carolyn Court**
**East Hanover, New Jersey 07936(US)**

(74) Representative: **Minoja, Fabrizio**
**Studio Consulenza Brevettuale Via Rossini, 8**
**I-20122 Milano(IT)**

## (54) Anti-fog coating.

(57) Curable coating compositions having more than 40% by weight of a hydrophilic monomer such as polyethylene glycol di(meth)acrylate together with 0.1 to 1.5% of a surfactant have excellent adhesion to a variety of substrates and when cured provide products having excellent anti-fog and anti-static properties.



Xerox Copy Centre

# ANTI-FOG COATING

The condensation of warm moist air on a cool surface, commonly known as fog, is not only an inconvenience, for example in the case of fogged mirrors, it is, in some situations such as fogged eyeglasses and automobile windshields, a serious hazard. A number of prior workers have have attempted to provide a solution to this problem.

U.S. Patent 4,080,476 discloses coating an optical substrate with a polymerized monomer containing both nitrogen and sulfur.

U.S. Patent 4,098,840 discloses use of an alkoxysilane hydrolysate to form anti-fog coatings.

U.S. Patent 4,127,682 discloses lightly cross linked polyvinyl alcohol in anti-fog coatings as does U.S. Patent 4,064,308.

U.S. Patent 4,214,908 discloses sulfonic acid type amphoteric surface-active agents in anti-fog compositions.

U.S. Patent 4,235,637 discloses a surfactant and a lower polyhydric alcohol, each associated with starch granules in anti-fog compositions.

U.S. Patent 4,332,859 discloses an anti-fog coating comprised of a certain undercoating and a melamine resin topcoating.

U.S. Patent 4,421,893 discloses certain silanes in anti-fog coatings as does U.S. Patent 4,472,464.

U.S. Patent 4,467,073 discloses an anti-fog coating comprised of polyvinyl pyrrolidone and isocyanate prepolymer.

U.S. Patent 4,478,909 discloses a film derived from curing polyvinyl alcohol, silica, and an organic silicon compound and a hydrolysate thereof to form an anti-fog film.

U.S. Patent 3,515,579 discloses non-fog coatings comprised of hydroxyalkyl mono acrylate or methacrylate together with other components.

U.S. Patent 3,821,136 discloses water absorptive polyurethane polymers in anti-fog coatings.

U.S. Patent 3,867,175 discloses cross-linked alkylene imine polymer in non-fog coatings.

U.S. Patent 3,929,699 discloses a partial ester of a polyol and an alkoxylated alkylphenol in anti-fog compositions as does U.S. Patent 3,950,289.

U.S. Patent 4,026,826 discloses alkoxysilanes and polyethylene glycol diacrylate in anti-fog compositions.

U.S. Patent 4,029,842 discloses certain silicon compounds in anti-fog coatings.

U.S. Patent 4,291,097 discloses hard, scratch resistant coatings comprised of polyfunctional monomer of a mono or polypentaerythritol poly (meth) acrylate. Minor amounts of polyethylene glycol mono- or di-(meth) acrylate monomer can be used to provide cloud prevention to the coatings.

Despite the considerable work illustrated by the above, the anti-fog coatings previously proposed have not been entirely satisfactory. Indeed, in many cases, the coatings failed to provide even minimal anti-fog protection.

The present invention relates to improved coatings which have excellent adhesion to a variety of substrates and which provide coated products having excellent anti-fog and anti-static properties. Essential to the coatings of the invention is a high concentration; i.e., more than 40% by weight and preferably 60 - 80% by weight, of a hydrophilic monomer such as polyethylene glycol di(meth)acrylate. An additional component necessary in the coating composition is a surfactant such as a fluorocarbon-based surfactant. Other components optionally can be employed depending upon the properties desired in the final coating and upon the method by which the coating is to be cured.

A first preferred subgroup of hydrophilic monomers are those of the formula:

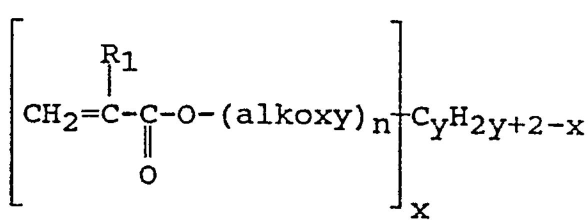

in which $R_1$ is hydrogen or methyl,
alkoxy has 2 or 3 carbon atoms,

x is the integer 2 or 3,
y is an integer of from 2 to 6, and
n is an integer of from 4 to 40.

A further preferred subgroup of hydrophilic monomers are polyethylene glycol diacrylate and polyethylene glycol dimethacrylate of the formula:

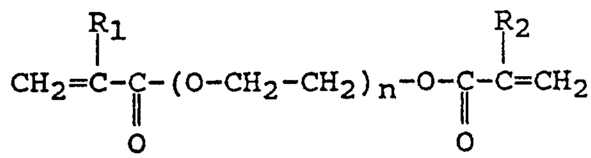

in which $R_1$ is hydrogen or methyl, $R_2$ is hydrogen or methyl group, and n is an integer of 4 to 40.

Especially preferred as the hydrophilic monomer poly(ethylene glycol) diacrylate. Other hydrophilic monomers which can be used include polyethylene glycol dimethacrylate, ethoxylated trimethylolpropane triacrylate, triacrylates and trimethacrylates of highly alkoxylated polyols and the like. Mixtures can be used.

Where abrasion resistance or surface hardness is desired, minor amounts of multifunctional crosslinking monomers can be incorporated in the coating. Examples include dipentaerythritol pentaacrylate, pentaerythritol tetraacrylate, trimethylolpropane triacrylate, ditrimethylolpropane tetraacrylate, pentaerythritol triacrylate, aliphatic urethane triacrylate, and the like. Mixtures can be used.

Reactive diluents which reduce the viscosity of the coating system so that the coating can be applied and leveled before curing can be employed. These materials are reactive and, upon curing, form part of the coating. Reactive diluents include N-vinylpyrrolidone, tetrahydrofurfuryl acrylate, ethoxyethoxyethyl acrylate, and isobornyl acrylate. Mixtures can be used.

The coating formulations can be cured by ultraviolet light, by ionization radiation such as electron beam, or by heat. Where ultraviolet light curing is employed, a photoinitiator, photosensitizer, or a blend of photoinitiator and photosensitizer can be employed. While photoinitiators and photosensitizers proceed by different mechanisms, they can be used interchangeably in the invention. These materials are used in amount usually in the range of 3 to 10 wt. % of total monomer in the composition, preferably 4 to 7 wt. %. Mixtures of photoinitiators and/or photosensitizers can be used. Preferred materials are benzoin ether, benzil ketal, acetophenones, substituted acetophenones, benzophenone/amine synergists, substituted acetophenone/benzophenone blends, and the like. Where ionization radiation such as electron beam is used for the cure, photoinitiators or photosensitizers are not normally needed.

Where the coating is cured by application of heat, chemical compounds which are free-radical sources such as benzoyl peroxide, azobis (2-methylbutanenitrile) and the like are used to initiate the cure.

Surfactants are employed in the coating compositions of the invention in order to ensure surface uniformity and smoothness. Surfactants lower the surface energy of the coating permitting improved wetting and flow during the coating process and providing lubricity in the cured coating. Indeed, it has been found that use of the proper surfactants is important insofar as the anti-fog characteristics of the finished coating is concerned. Preferred surfactants are fluorocarbon-based materials; silicone-based materials are less advantageous. The surfactant is used in amount of 0.1 to 1.5 wt. % of total monomers, preferably 0.3 to 1.0 wt. %. Mixtures can be used. Illustrative surfactants include materials such as 3M's FC-171 which is a mixture of more than 80% fluorinated alkyl alkoxylates (CAS 68958-61-2) and less than 10% each of fluorinated alkyl alkoxylates (CAS 68958-60-1), fluorinated alkyl alkoxylates (CAS 68957-62-0), and fluorinated alkyl sulfonamides (CAS 4151-50-2); DuPont's FSO Fluorosurfactant which contains perfluoroalkyl ethoxylate and ethylene glycol; 3M's FC 170 C FLUORAD fluorochemical surfactant which contains about 70% of fluoroaliphatic oxyethylene adduct (C8) (CAS 29117-08-6), and lesser amounts of polyoxyethylene glycol (CAS 25322-08-3), 1,4-dioxame (CAS 123-91-1) water (CAS 7732-18-5), fluoroaliphatic oxyethylene adduct (C7) (CAS 68298-81-7), fluoroaliphatic oxyethylene adduct (C6) (CAS 68298-81-7), fluoroaliphatic oxyethylene adduct (C6) (CAS 56372-23-7), fluoroaliphatic oxyethylene adduct (C5) (CAS 68298-80-6), and fluoroaliphatic oxyethylene adduct (C4) (CAS 682978-79-3); and GE's SF 1188 which comprises silicone polyether copolymer.

The coating of this invention can be applied to substrates by conventional means, including spray coating, dip coating, flow coating, spin coating, roll coating, and brushing. The coating can be applied to any substrates, preferably plastic substrates such as polycarbonate, acrylics, polysulfone, and other engineering plastics in the form of sheets, films or molded articles. The inventive coating is especially useful to provide anti-fog properties to transparent or reflective substrates including lenses, mirrors, and the

like.

Since the coating of this invention also possesses anti-static property, the coating can be used if an anti-static property is desired.

The coating of this invention can be applied to a substrate in any desired thickness. It has been found that good anti-fog effect can be obtained when the coating is about 0.3 to 1.5 mil-thick. This generally will give longer than one-minute (60 - 75 seconds) fogging time at 90-92° C.

The preparation of the improved coatings of the invention is straightforward. Generally, simple mixing produces a homogeneous solution. Solids can be incorporated in the coating formulations in accordance with generally known procedures.

## Experiments

In each of the following experiments, the designated anti-fog coating was applied onto a clean (propanol-and ionized air-treated) polycarbonate panel (6" x 8"; 60-mil thick) by using #5 Meyer bar (0.5-mil coating). Curing was accomplished by a Hanovia laboratory UV processor at 200 watts per inch lamp with 3 passes @ 15 feet per minute.

The following procedures were used to determine the anti-fog properties of the coatings:

### A. Hot Fog Test

A beaker (300-ml) was filled with tap water to 275-ml line and covered with the coated panel (coating facing inward). The beaker was placed in a bath containing water heated to boiling. Temperature of beaker was maintained between 90 - 92° C. Fogging of the coating (5.412 square inches) was timed and is reported in the following tables.

### B. Cold Fog Test

The coated panels were stored in the freezer compartment (0° C) of a refrigerator for seven days and then checked for fogging upon exposure to air.

The anti-fog coatings of this invention showed no fogging in this test.

### C. Cold/Hot Fog Test

The coated panels were cooled to 0° C and then transferred within 10 seconds to an atmosphere of 100% relative humidity and 38° C (Tenney TH Jr., Tenney Engineering, Inc., Union, NJ). After 10 seconds, the hot fog test was run as in A.

The anti-fog coatings of this invention generally had 60 to 75 seconds fogging time by this test.

The following table shows the anti-fog properties of various preferred coating compositions of the invention having different monomer ratios:

Table 1

| Formulation | 1 | 2 | 3 | 4 | 5 | 6 | 7 |
|---|---|---|---|---|---|---|---|
| SR344 | 10 | 10 | 10 | 10 | 10 | 10 | 10 |
| SR399 | 3 | 2 | 0.6 | - | 3 | 3 | 3 |
| N-VP | 2 | 6 | 1.6 | - | 2 | 2 | 2 |
| HEMA | - | - | - | - | 0.5 | - | - |
| HPA | - | - | - | - | - | - | 0.5 |
| QM824 | - | - | - | - | - | - | 0.5 |
| Photoinitiator | 5% | 5% | 5% | 5% | 5% | 5% | 5% |
| Surfactant | 0.5% | 0.5% | 0.5% | 0.5% | 0.5% | 0.5% | 0.5% |
| Fogging Time (Seconds) at 90-92° C | 66 | 50 | 81 | 105 | 83 | 65 | 72 |

SR344 = Polyethylene glycol 400 diacrylate (Sartomer)
SR399 = Dipentaerythritol pentaacrylate (Sartomer)
N-VP = N-vinyl pyrrolidone
HEMA = Hydroxyethyl methacrylate
HPA = Hydroxypropyl acrylate
QM824 = Dimerized acrylic acid (Rohm and Haas)

The photoinitiator was a substituted acetophenone (Irgacure 184, Ciba-Geigy) and was used in amount of 5% on the total weight of monomers.

The surfactant was a fluorocarbon (FC 171, 3M) and was used in amount of 0.5% on the total weight of monomers.

Fogging Time: The coating was 0.5 mil-thick on polycarbonate panels. Fogging times are given. An uncoated panel fogged instantaneously.

All coatings had 100% adhesion and good steel-wool scratch resistance.

The following table shows the anti-fog properties of coatings of the invention containing other hydrophilic monomers:

Table 2

| Formulation | 8 | 9 | 10 | 11 | 12 | 13 | 14 |
|---|---|---|---|---|---|---|---|
| SR252 | 15 | - | - | - | - | - | - |
| SR259 | - | 15 | - | - | - | - | - |
| SR344 | - | - | 15 | - | - | - | - |
| SR9035 | - | - | - | 15 | - | - | - |
| Photomer 4050 | - | - | - | - | 15 | - | - |
| Photomer 4155 | - | - | - | - | - | 15 | - |
| Photomer 4158 | - | - | - | - | - | - | 15 |
| SR399 | 2 | 2 | 2 | 2 | 2 | 2 | 2 |
| N-VP | 3 | 3 | 3 | 3 | 3 | 3 | 3 |
| Photoinitiator | 5% | 5% | 5% | 5% | 5% | 5% | 5% |
| Surfactant | 0.5% | 0.5% | 0.5% | 0.5% | 0.5% | 0.5% | 0.5% |
| Fogging Time (Seconds) at 90-92° C | 61 | 28 | 100 | 52 | 46 | 61 | 60 |

SR252 = Polyethylene glycol 600 dimethacrylate (Sartomer)
SR259 = Polyethylene glycol 200 diacrylate (Sartomer)
SR9035 = Highly alkoxylated triacrylate (Sartomer)
Photomer 4050 = Polyethylene glycol 200 diacrylate (Henkel)
Photomer 4056 = Polyethylene glycol 600 diacrylate (Henkel)
Photomer 4155 = Medium-molecular-weight ethoxylated trimethylolpropane triacrylate (Henkel)
Photomer 4158 = High-molecular-weight ethoxylated trimethylolpropane triacrylate (Henkel)

The photoinitiator was a substituted acetophenone (Irgacure 184, Ciba-Geigy) and was used in amount of 5% on the total weight of monomers.

The surfactant was a fluorocarbon (FC 171, 3M) and was used in amount of 0.5% on the total of weight of monomers.

The following table shows the anti-fog properties of coatings of the invention wherein various different multi-functional crosslinking monomers were employed:

Table 3

| Formulation | 15 | 16 | 17 | 18 | 19 | 20 | 21 |
|---|---|---|---|---|---|---|---|
| SR344 | 15 | 15 | 15 | 15 | 15 | 15 | 15 |
| SR295 | 4 | - | - | - | - | - | - |
| SR351 | - | 4 | - | - | - | - | - |
| SR355 | - | - | 4 | - | - | - | - |
| SR399 | - | - | - | 4 | - | - | - |
| SR444 | - | - | - | - | 4 | - | - |
| SR454 | - | - | - | - | - | 4 | - |
| Ebecryl 264 | - | - | - | - | - | - | 4 |
| N-VP | 5 | 5 | 5 | 5 | 5 | 5 | 5 |
| Photoinitiator | 5% | 5% | 5% | 5% | 5% | 5% | 5% |
| Surfactant | 0.5% | 0.5% | 0.5% | 0.5% | 0.5% | 0.5% | 0.5% |
| Fogging Time (Seconds) at 90-92° C | 61 | 52 | 54 | 41 | 55 | 58 | 52 |

SR295 = Pentaerythritol tetraacrylate (Sartomer)
SR351 = Trimethylolpropane triacrylate (Sartomer)
SR355 = Di-trimethylolpropane tetraacrylate (Sartomer)
SR444 = Pentaerythritol triacrylate (Sartomer)
SR454 = Ethoxylated trimethylolpropane triacrylate (Sartomer)
Ebecryl 264 = Aliphatic urethane triacrylate (Radcure Specialties)

The photoinitiator was a substituted acetophenone (Irgacure 184, Ciba-Geigy) and was used in amount of 5% on the total weight of monomers.

The surfactant was a fluorocarbon (FC 171, 3M) and was used in amount of 0.5% on the total weight of monomers.

All coatings had 100% adhesion and good steel-wool scratch resistance.

The following table shows the anti-fog properties of coatings of the invention wherein various different reactive diluents were employed:

Table 4

| Formulation | 22 | 23 | 24 | 25 |
|---|---|---|---|---|
| SR344 | 12 | 12 | 12 | 12 |
| SR399 | 2 | 2 | 2 | 2 |
| N-VP | 3 | - | - | - |
| SR256 | - | 3 | - | - |
| SR285 | - | - | 3 | - |
| QM589 | - | - | - | 3 |
| Photoinitiator | 5% | 5% | 5% | 5% |
| Surfactant | 0.5% | 0.5% | 0.5% | 0.5% |
| Fogging Time (Seconds) at 90-92° C | 60 | 72 | 65 | 70 |

SR256 = Ethoxyethoxyethyl acrylate (Sartomer)
SR285 = Tetrahydrofurfuryl acrylate (Sartomer)
QM589 = Isobornyl acrylate (Rohm and Haas)

The following table shows the anti-fog properties of coatings of the invention wherein various different surfactants were used. As can be seen, the surfactant employed had a substantial effect on the anti-fog properties:

Table 5

| Formulation | 26 | 27 | 28 |
|---|---|---|---|
| SR344 | 15 | 15 | 15 |
| SR399 | 2 | 2 | 2 |
| N-VP | 3 | 3 | 3 |
| Photoinitiator | 5% | 5% | 5% |
| Surfactant: | | | |
| SF1188 | 0.5% | - | - |
| FC170C | - | 0.5% | - |
| FSO | - | - | 0.5% |
| Fogging Time | 5 sec | 160 sec | >5 min |
| SF1188 is a silicone surfactant from General Electric. FC 170C is a fluorocarbon surfactant from 3M. FSO is a fluorocarbon surfactant from DuPont. | | | |

In addition to the anti-fog characteristics shown above, various other tests were performed on the coatings. The following is a summary of the tests and results:

Adhesion

A. Initial

A coated panel is crosshatched with scratch lines forming 100 squares. The crosshatch area is covered with adhesive tape (Permacel 99, Avery International Co., New Brunswick, NJ) and even pressure is applied to the tape. The tape is then pulled from the coating and the percentage adhesion is determined by counting the squares which are removed by the tape. Reference: ASTM D-3359.

B. After Temperature/Humiditv Exposure

After 96 hours at 100% relative humidity and 38° C, check adhesion as in (A).

The anti-fog coatings of this invention had 100% adhesion on the substrate in the initial and the environmental exposure.

C. After Water Immersion

A coated panel was soaked in tap water at room temperature for 24 hours and then air dried. After 12 hours at room temperature, check adhesion as in (A).

The anti-fog coatings of this invention had 100% adhesion on the substrate after water immersion.

Abrasion Resistance

A. Initial

This is a steel-wool rotary test which involves subjecting the coating to 5 rotations of a 1.25-square-inch pad of #0000 grade steel wool (International Steel Wool Corp., Springfield, OH) which has been loaded with weights to give at least 4 psi pressure. Coating should have no or very slight scratch at 4 psi.

B. After Temperature/Humiditv Exposure

After 96 hours at 100% relative humidity and 38° C, abrasion resistance did not change.

C. After Water Immersion

Coated panel was soaked in tap water at room temperature for 24 hours and then air dried. After 12 hours at room temperature, check abrasion resistance. The abrasion resistance of the anti-fog coating did not change.

Anti-Static Effect

A coated panel was rubbed 20 times with a piece of cloth and then brought within 1 cm of cigarette ashes. The anti-fog/anti-static coatings attracted no ashes.

Measurement of Surface Resistivity

The anti-fog/anti-static coating had a surface resistivity of $<10^{12}$ ohms in a room of 50% relative humidity and 24° C as measured by Resistance Indicator (Model 860, Electro-Tech Systems, Inc., Glenside, PA). It is within the range of being anti-static as stipulated by the industry.

A number of comparative experiments were performed following various examples set forth in U.S. Patent 4,291,097 mentioned above.

Comparative Examples

Following Example 18 of U.S. Patent 4,291,097, but using polyethylene glycol diacrylate rather than polyethylene glycol dimethacrylate, a coating formulation having the following composition was prepared:

| | |
|---|---|
| SR 399 | 24 grams |
| SR 285 | 7 grams |
| SR 344 | 8.9 grams |
| Phosphoric acid ester | 5.9 grams |
| Ethanolamine compound | 1.9 grams |
| Vicure 10 | 1.8 grams |
| | 49.5 grams |

Following Example 23 of U.S. Patent 4,291,097, a coating formulation having the following composition was prepared:

| | |
|---|---|
| SR 399 | 22.8 grams |
| SR 285 | 3.8 grams |
| Phosphoric acid ester | 4.6 grams |
| Ethanolamine compound | 1.4 grams |
| SR 252 | 3.8 grams |
| Vicure 10 | 1.8 grams |
| | 38.2 grams |

Following Example 23 of U.S. Patent 4,291,097, but using polyethylene glycol diacrylate rather than polyethylene glycol dimethacrylate, a coating formulation having the following composition was prepared:

| | |
|---|---|
| SR 399 | 22.8 grams |
| SR 285 | 3.8 grams |
| Phosphoric acid ester | 4.6 grams |
| Ethanolamine compound | 1.4 grams |
| SR 344 | 3.8 grams |
| Vicure 10 | 1.8 grams |
| | 38.2 grams |

The following are the materials used in the above:

1. SR 252 (Sartomer) = Polyethylene glycol dimethacrylate, $(OCH_2CH_2)_n$, n = 14
2. SR 285 (Sartomer) = Tetrahydrofurfuryl acrylate
3. SR 344 (Sartomer) = Polyethylene glycol diacrylate, $(OCH_2CH_2)_n$, n = 9
4. SR 399 (Sartomer) = Dipentaerythritol pentaacrylate
5. Phosphoric acid ester = Bis (methacryloxyethyl) phosphate
6. Ethanolamine - type compound = Dimethylaminoethanol
7. Photoinitiator Vicure 10 (Akzo Chemicals) = Benzoin isobutyl ether

Isopropanol and toluene were not used in the above three formulations because the solvent blend was found incompatible with the key coating ingredients. It is believed that this would affect properties of the cured coatings.

In each case, the coating was applied onto a clean (propanol- and ionized air-treated) polycarbonate and acrylic panels (6" x 8"; 60-mil thick) by using #3 Meyer bar (0.3-mil coating) and #10 Meyer bar (1.0-mil coating). Curing was accomplished by a Hanovia laboratory UV processor at 300 watts per inch lamp with 6 passes at 15 feet per minute in the case of the duplication of Example 18 and at 200 watts per inch lamp with 3 passes at 15 feet per minute in the case of Examples 23 (Example 18 formulation did not cure at 200 watts).

The following were the findings with these formulations:

1. Coated panels were slightly hazy.
2. Coatings did not have crosshatch adhesion (all coatings lifted off with Permacel 99 tape).
3. Coatings did not have anti-static property (instant pick up of cigarette ashes).
4. Coatings did not have anti-fog property (1 to 1.5 seconds fogging time with 90°C water vapor; uncoated panels experienced the same fogging time).

## Claims

1. An anti-fog coating composition comprised by weight of more than 40% hydrophilic monomer and 0.1 to 1.5% based on the weight of monomer of a surfactant.

2. A coating composition according to claim 1 wherein the hydrophilic monomer is of the formula:

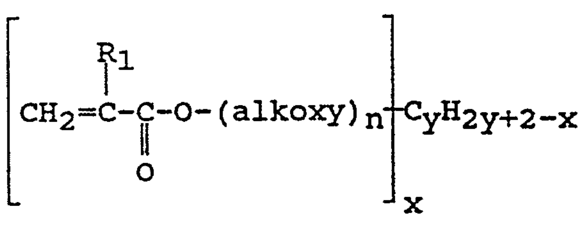

in which $R_1$ is hydrogen or methyl,
alkoxy has 2 or 3 carbon atoms,
x is the integer 2 or 3,
y is an integer of from 2 to 6, and
n is an integer of from 4 to 40.

3. A coating composition according to claim 2 wherein the hydrophilic monomer is polyethylene glycol di(meth)acrylate, ethoxylated trimethylolpropane tri(meth)acrylate, or propoxylated trimethylolpropane tri-(meth)acrylate, or mixtures thereof.

4. A coating composition according to claim 2 in which the hydrophilic monomer is of the formula:

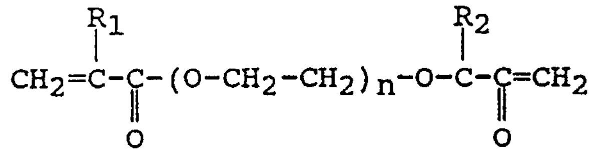

in which each of $R_1$ and $R_2$, independent of the other, is hydrogen or methyl, and n is an integer of 4 to 40.

5. A coating composition according to claim 1 containing up to 30% by weight of a multifunctional crosslinking monomer.

6. A coating composition according to claim 5 wherein the multifunctional crosslinking monomer is dipentaerythritol pentaacrylate, pentaerythritol triacrylate, pentaerythritol tetraacrylate, trimethylolpropane triacrylate, di-trimethylolpropane tetraacrylate, aliphatic urethane triacrylate, or a mixture of two or more thereof.

7. A coating composition according to claim 1 containing up to 30% by weight of a monofunctional or difunctional reactive diluent monomer.

8. A coating composition according to claim 7 wherein the monofunctional or difunctional reactive diluent monomer is N-vinylpyrrolidone, ethoxyethoxyethyl acrylate, tetrahydrofurfuryl acrylate, isobornyl acrylate, hydroxyethyl methacrylate, hydroxypropyl methacrylate, hydroxypropyl acrylate, dimerized or oligomerized acrylic acid, 2-ethylhexyl acrylate, 1,6-hexanediol diacrylate, tripropylene glycol diacrylate, or a mixture of two or more thereof.

9. A coating composition according to claim 1 in which the surfactant is a fluorocarbon or a silicone-based material.

10. A coating composition according to claim 1 further comprising an effective amount of a photoinitiator or thermal polymerization initiator.

11. The method of imparting anti-fogging properties to a substrate which comprises applying the coating composition of claim 1 to the substrate and curing said coating.

12. The method of claim 11 wherein the coating composition comprises a photoinitiator and the coating is cured by irradiation.

13. A coated product having anti-fog properties comprising a substrate having cured thereon the coating composition of claim 1.